# EUROPEAN PATENT APPLICATION

(11) **EP 4 335 637 A1**
(43) Date of publication of application: **13.03.2024**
(21) Application number: 23196200.2
(22) Date of filing: 08.09.2023
(51) Int. Cl.: B32B 5/02, B32B 5/18, B32B 5/24

(54) **BACKING LAYER FOR INSULATING CONSTRUCTION PANELS AND METHOD OF MANUFACTURING THE BACKING LAYER**

(30) Priority: 12.09.2022 IT 202200018564
(71) Applicant: Silcart S.p.A., 31030 Carbonera, Frazione Mignagola TV (IT)
(72) Inventor: FAOTTO, Ugo, 31030 Carbonera, TREVISO (IT)
(74) Representative: Pennacchio, Salvatore Giovanni

(57) **Abstract**

The invention relates to a backing layer (2) for an insulating construction panel (10; 20). Such a panel comprises a main layer (1) made of thermally insulating material comprising a first surface (1') and an opposite second surface (1");
- at least one backing layer connected to the main layer along at least one of such first and second surfaces.

The backing layer comprises:
- a reinforcing layer (4) made of fibrous material,
- a coating layer (3) of the reinforcing layer.

The coating layer is obtained by applying, to the reinforcing layer made of fibrous material, a compound comprising an aqueous dispersion of at least one polymer and inert fillers, each having thermal conductivity in the range between 0.01 W/mK and 3 W/mK, and then drying.

## Description

### TECHNOLOGICAL BACKGROUND OF THE INVENTION

### Field of application

The present invention relates to a flexible backing layer for insulating panels and to a multi-layer insulating construction panel, in particular a thermally insulating panel made of expanded synthetic material, employing such a flexible backing layer on one or both external opposite faces of the panel.

In particular, the invention relates to a backing layer for insulating construction panels with increased thermal insulation properties.

### Prior art

Multi-layer insulating panels are widely employed in building constructions, for example to ensure the thermal insulation of walls, floors, and roofs or coverings in general.

A known insulating construction panel comprises a thermally insulating layer, for example made of polyurethane foam, interposed between two backing layers adapted to coat the thermally insulating layer on the major faces thereof (not the outer delimitation or cutting edges).

The backing layers serve a dual purpose: on the one hand, they contain the expansion of the polyurethane foam during the manufacturing of the panel, on the other, they give the formed panel a predetermined shape and thickness and contribute to the dimensional stability and mechanical resistance thereof, for example flexural, impact, abrasion resistance.

Backing layers are known, in turn made as a multi-layer structure, having a reinforcing layer made of fibrous material, e.g., glass fiber, coated with a finishing layer of the mineral type. Such a finishing layer is conventionally made from fossil-based binding resins and inert fillers such as carbonates.

By virtue of the materials of the single reinforcing and finishing layers, and of the overall small thickness, the backing layer (before the application and integration thereof with the thermally insulating layer of polyurethane foam) is flexible, foldable, and can be wound in rolls without undergoing structural change or damage.

The application and securing of the backing layer to the thermally insulating layer of polyurethane occur, for example, by adhesion between the reinforcing layer and the polyurethane layer by means of the polyurethane itself during the expansion step.

The aforesaid backing layers for insulating panels, in particular those with the fibrous layer in contact with the polyurethane foam, are configured to adhere in an optimal manner to the foam itself by virtue of the presence of the fibers. However, such backing layers have the drawback that they can cause the formation of irregularities and hollow portions in the compact structure of the insulating layer of the panel, i.e., without insulation, starting from the interface surface between the fibrous layer of the backing layer and the insulating layer. The formation of such irregularities of the insulating layer is generally caused by interactions between the fibrous layer of the backing layer with the polyurethane foam. However, the irregularities of the insulating layer can also be generated upon the interaction of the polyurethane foam with the mineral finishing layer of the backing layer.

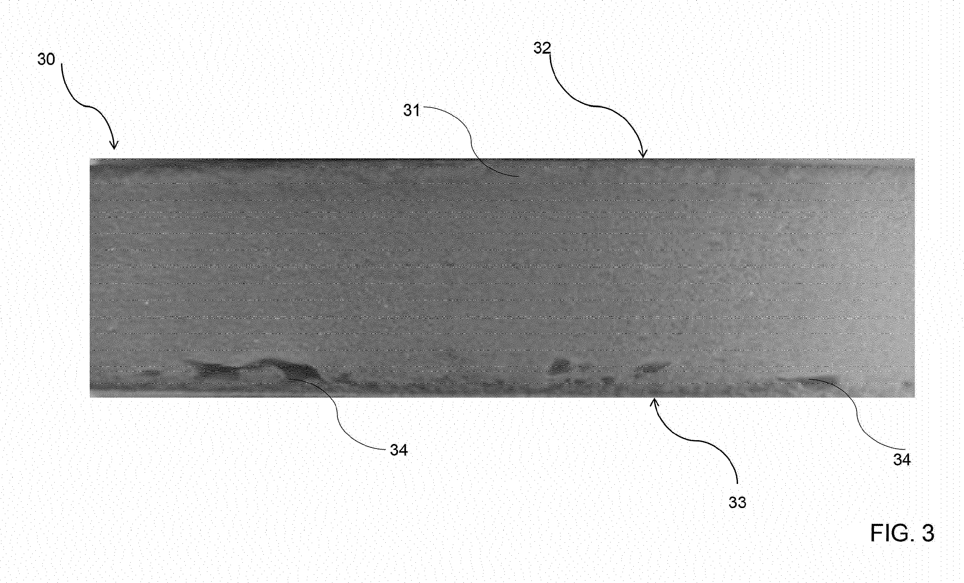

Figure 3 shows an enlargement of a photograph of a side view of a thermally insulating construction panel 30 in assembled configuration in which an insulating layer 31 made of expanded synthetic material is interposed between a first 32 and a second 33 backing layer, each having a much smaller thickness than that of the insulating layer of the panel.

In particular, such a panel 30 comprises the above-mentioned irregularities 34 in a portion of the structure of the insulation 31 close to the second backing layer 33.

Note that such irregularities 34 can also extend into the body of the insulating layer 31 of panel 30 starting from the interface between the fibrous layer of the second backing layer 33 and the insulating layer, for example, up to involving a thickness of about 5-8mm of the body of the insulating layer 31 of such an interface surface.

The presence of these irregularities 34 and hollow portions results in a reduction of the thermal insulation properties of panel 30 because the foam in the area involved by such irregularities is not perfectly formed and does not consist of closed and regular cells.

### SUMMARY OF THE INVENTION

Therefore, it is the object of the present invention to provide a backing layer for a thermally insulating panel and a multi-layer thermally insulating panel having features such as to obviate the drawbacks described with reference to the prior art.

In particular, the invention aims to improve the thermally insulating properties of the panel by compensating for the presence of the irregularities present in a portion of the insulating foam layer making the thermal insulation less efficient by employing a backing layer itself having thermal insulation properties.

Such an object is achieved by a backing layer for an insulating panel for building constructions according to claim 1.

It is a particular object of the invention to provide a backing layer for a thermally insulating panel having such features as to reconcile the need for:
- flexibility and windability of the backing layer before the application thereof to the insulating panel,
- mechanical resistance,
- dimensional stability,
- suitability for industrially manufacturing the insulating panel made of synthetic expanded/extruded material, in particular polyurethane foam, which is manufactured so as to have good thermal insulation properties.

The invention also relates to a method for manufacturing such a backing layer according to claim 17 and a multi-layer insulating panel according to claims 15 and 16.

Preferred embodiments of such a backing layer for panels and of the insulating panel are described in the dependent claims.

### BRIEF DESCRIPTION OF THE DRAWINGS

Further features and advantages of the backing layer of an insulating construction panel according to the invention will become apparent from the description of preferred embodiments, given by way of non-limiting indications, with reference to the accompanying drawings, in which:
- **Figure 1** is a cross-section view of a thermally insulating construction panel according to a first embodiment, in which two outer backing layers are shown detached from (or not yet joined with) an inner insulating layer made of expanded synthetic material;
- **Figure 2** is a cross-section view of a thermally insulating construction panel according to a second embodiment, in which two outer backing layers are shown detached from (or not yet joined with) an inner insulating layer made of expanded synthetic material;
- **Figure 3** shows an enlargement of a photograph of a side view of a thermally insulating construction panel of the known type in assembled configuration in which an insulating layer made of expanded synthetic material is interposed between two backing layers and comprises irregularities in a portion of the structure of the insulation close to one of the two backing layers.

Similar or equivalent elements in the aforesaid figures are indicated by the same reference numerals.

### DETAILED DESCRIPTION

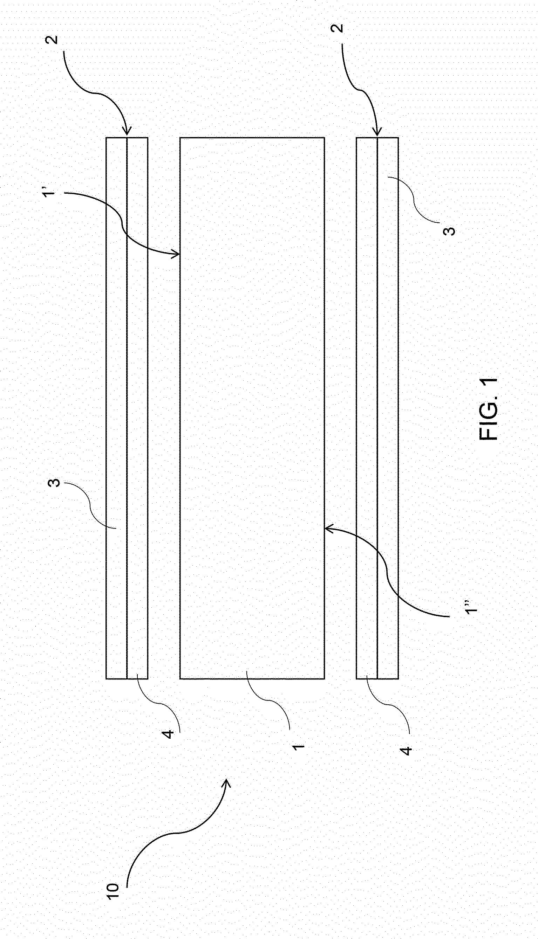

With reference to Figures 1-2, a multi-layer construction panel having thermal insulation properties is indicated as a whole by reference numeral 10, 20 in two embodiments.

The insulating panel 10, 20 is advantageously employable in the construction field for covering and/or thermally insulating walls, floors and roofs.

Such an insulating panel 10, 20 comprises a main layer 1 made of insulating material, e.g., polyurethane foam, having a first surface 1' and second surface 1" opposite to each other (here, this means the larger surfaces and not the outline surfaces highlighting the stratification of panel 10, 20).

By way of example, the main thermally insulating layer 1 can be made of polyurethane foam or phenolic foam.

The insulating panel 10, 20 further comprises at least one backing layer 2 connected to the main layer 1 along one or both first 1' and second 1" surfaces. In other words, the main layer 1 of panel 10 is coated on at least one side by the backing layer 2 or is interposed between two backing layers 2.

The backing layer 2 comprises a reinforcing layer 4 made of fibrous material and a coating layer 3 of the reinforcing layer 4.

For example, the fibrous material of the reinforcing layer 4 can be formed from:
- a non-woven fabric consisting of or containing the aforesaid fibrous material, for example,
- a fabric (weft-warp) consisting of or containing the aforesaid fibrous material, for example,
- a net consisting of or containing the aforesaid fibrous material, for example,
- a web consisting of or containing the aforesaid fibrous material, for example,
- a mesh consisting of or containing the aforesaid fibrous material, for example.

In particular, the material used to obtain the reinforcing layer 4 is selected from the group consisting of:
- mineral fibers, such as glass fibers, rock wool, ceramic fibers, for example;
- synthetic fibers, such as polyethylene terephthalate (PET), polypropylene (PP), polyethylene (PE), nylon, for example;
- natural fibers, such as cotton, linen, jute, for example.

In a particular embodiment, the reinforcing layer 4 made of fibrous material is a non-woven fiberglass fabric. For example, such a reinforcing layer 4 has a basis weight (weight per square meter) between 20 and 200 g/m², preferably a basis weight in the range 40-100 g/m².

In the embodiment in Figure 1, the reinforcing layer 4 of the backing layer 2 is oriented towards and facing and connected to the respective outer surface 1', 1" of the main layer 1 of panel 10.

The reinforcing layer 4 gives the backing layer 2, and therefore the insulating panel 10, 20, mechanical resistance and/or dimensional stability.

According to the invention, the coating layer 3 of the backing layer 2 is obtained by applying, to the reinforcing layer 4, a compound comprising an aqueous dispersion of one or more polymers (dispersed step) and inert fillers, each having thermal conductivity in the range between 0.01 W/mK and 3 W/mK, and successive drying, in particular at a high temperature.

In particular, the aforesaid compound is fluid and the aforesaid application step comprises a coating of such a compound on the reinforcing layer 4, for example.

In an embodiment, the aforesaid inert fillers of the coating layer 3 have an average diameter in the range 10pm - 200um, preferably an average diameter in the range 20um - 60um.

In particular, such inert fillers of the coating layer 3 are selected from the group consisting of: hollow glass microspheres, hollow ceramic microspheres.
As is known, the size of the inert fillers, in particular hollow glass microspheres, of a powder can be measured with particle size analysis. The particle size distribution of the hollow glass spheres, defined as percentage by volume, is measured, for example, with the laser light scattering method with a Malvern Mastersizer 3000 tool with a Fraunhofer calculation algorithm.
In the following of the description, average diameter means the size of the hollow glass microspheres in an average distribution, or at 50% (d50), of such microspheres employed in the coating layer 3.
For example, the hollow glass microspheres employable in the coating layer 3 of the invention are described in the document "Scheda Tecnica - Glass Bubbles - Microsfere cave di vetro" (Data sheet - Glass Bubbles - Hollow glass microspheres) to 3M Italia Srl. As for the dimensional distribution of the microspheres, such a document provides for:
- dimensional distribution 10% of the glass microspheres (d10, percentage by volume), with size between 9um and 30um;
- dimensional distribution 50% of the microspheres (d50, percentage by volume), with size between 15µm and 65pm;
- dimensional distribution 90% of the glass microspheres (d90, percentage by volume), with size between 24um and 110pm;
- maximum dimensional distribution of the glass spheres (max, percentage by volume), maximum size of 120um.

In an embodiment, the inert fillers of the coating layer 3 comprise hollow glass microspheres; the thermal conductivity value of each of such hollow glass microspheres is between 0.044 W/mK and 0.143 W/mK.

More specifically, the inert fillers of the coating layer 3 comprise hollow glass microspheres, each having a thermal conductivity value between 0.051 W/mK and 0.085 W/mK.

In a further embodiment, the hollow glass microspheres employable as inert fillers in the coating layer 3 have thermal conductivity of 0.051 W/mK or a thermal conductivity of 0.065 W/mK or 0.085 W/mK.

For example, the hollow ceramic microspheres employable as inert fillers in the coating layer 3 have a thermal conductivity of 2.3 W/mK.

In an embodiment, such inert fillers of the coating layer 3 comprise hollow glass microspheres having average diameter, i.e., dimensional distribution of 50% of the hollow glass spheres (d50), of 60um, in which the thermal conductivity value of each microsphere is equal to 0.051 W/mK.

In a further embodiment, the applied compound of the coating layer 3 comprises from 5% to 15%, percentages by weight, of inert fillers of different type, such as, e.g., hollow glass microspheres, hollow ceramic microspheres.

In a particular embodiment, the inert fillers of the applied compound used to obtain the coating layer 3 comprise 90%, by weight, of hollow glass microspheres with conductivity of 0.051 W/mK, and 10%, by weight, of hollow ceramic microspheres with conductivity of 2.3 W/mK.

In a further embodiment, the applied compound of the coating layer 3 comprises from 5% to 15%, percentages by weight, of inert fillers of the same type and having mutually different thermal conductivity values.

In a particular embodiment, the inert fillers of the applied compound used to obtain the coating layer 3 comprise 70%, by weight, of hollow glass microspheres with conductivity of 0.051 W/mK, and 30%, by weight, of hollow glass microspheres with conductivity of 0.065 W/mK.

In an embodiment, said one or more polymers of the coating layer 3 comprise a polymer dispersion of polymers or copolymers selected from the group consisting of: acrylics, styrenics, vinyls, silicones, silanes, polyurethanes, vinyl acetates, vinyl versatates, and combinations thereof.

In a further embodiment, such an applied compound of the coating layer 3 comprises:
- a polymer resin in aqueous dispersion,
- the aforesaid inert fillers comprising hollow glass microspheres, in which the thermal conductivity value of each of such hollow glass microspheres is between 0.044 W/mK and 0.143 W/mK, more specifically, between 0.051 W/mK and 0.085 W/mK,
optionally water and additives.

In a further particular embodiment, the applied compound of the coating layer 3 comprises:
- from 10% to 30%, percentages by weight, of styrene acrylic resin in aqueous dispersion;
- from 5% to 15%, percentages by weight, of hollow glass microspheres in which the thermal conductivity value of each microsphere is equal to 0.051 W/mK or 0.065 W/mK or 0.085 W/mK,
- from 20% to 30%, percentages by weight, of further inert fillers and additives,
- from 30% to 50%, percentages by weight, of water.

Note that the percentages by weight of the compound of the coating layer 3 indicated above refer to such a fluid compound applied to the reinforcing layer 4 before to the drying step of the backing layer 2 for panels.

Such additives mentioned above comprise wetting agents, defoamers, dispersants, biocides, thickeners, pigments. The further inert fillers comprise flameretardant fillers, for example.

In order to obtain a substantial uniformity of the properties and thickness of the backing layer 2, the coating layer 3 is applied to the reinforcing layer 4 so as to cover the entire surface thereof in a substantially uniform manner.
For example, once formed, an overall thickness of the backing layer 2 is in the range of 0.2mm - 4mm, preferably between 0.5mm and 3mm, more specifically in the range 0.7mm - 2mm.

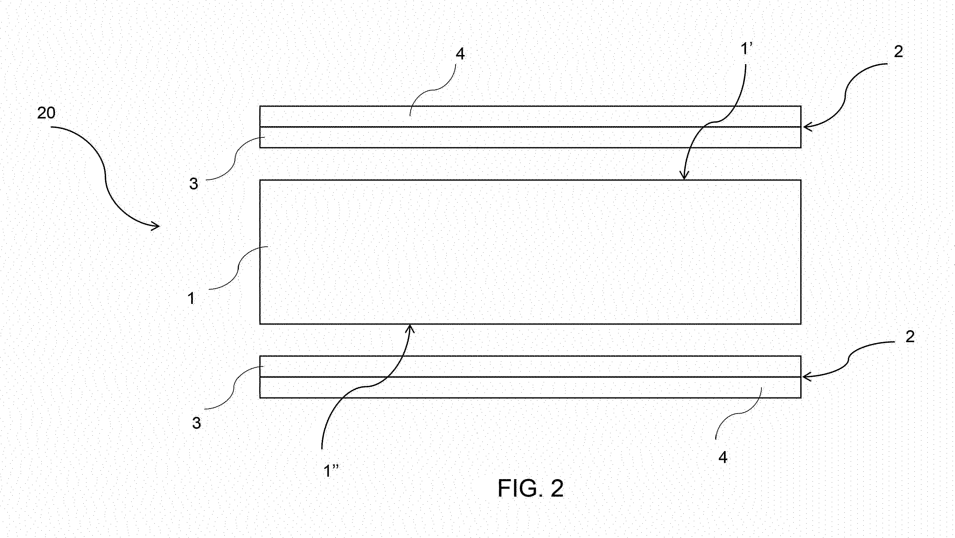

In the embodiment in Figure 2, it is the coating layer 3 of the backing layer 2 to be oriented towards and facing and connected to the respective outer surface 1', 1" of the main layer 1 of panel 20, and not the reinforcing layer 4.

In a further embodiment (not shown in the drawings), the insulating panel comprises two backing layers 2, of which:
- a first backing layer has the reinforcing layer 4 oriented towards and facing and connected to the first outer surface 1' of the main layer 1 of the panel;
- a second backing layer has the coating layer 3 of the reinforcing layer oriented towards and facing and connected to the second outer surface 1" of the main layer 1 of the panel.

The creation of the backing layer 2 by means of a coating layer 3, obtained by applying, to the fibrous reinforcing layer 4, an aqueous dispersion of polymers and fillers having thermal conductivity in the range between 0.01 W/mK and 3 W/mK, in particular of inert fillers comprising hollow glass microspheres, each having a thermal conductivity value between 0.044 W/mK and 0.143 W/mK, more specifically between 0.051 W/mK and 0.085 W/mK, further allows obtaining and reconciling the needs for:
- flexibility and windability of the backing layer 2 before the application thereof to the insulating panel 10, 20;
- mechanical resistance of the backing layer 2 and the insulating panel 10, 20;
- dimensional stability of the backing layer 2 and the insulating panel 10, 20;
- fire-resistance of the backing layer 2 and panel 10, 20;
- air permeability of the backing layer 2;
- suitability for the industrial manufacturing of the insulating panel 10, 20 made of a synthetic expanded/extruded material, in particular polyurethane foam.

Note that such properties of the backing layer 2 are achieved, in particular, when the inert fillers of the coating layer 3 comprise hollow glass microspheres, each having a thermal conductivity of 0.051 W/mK or a thermal conductivity of 0.065 W/mK or a thermal conductivity of 0.085 W/mK.

The application and securing of the backing layer 2 to the main layer 1 of the insulating panel 10, 20 occurs, for example, by adhesion between the reinforcing layer 4 (or the coating layer 3) of the backing layer 2 and the main layer 1, for example by means of the same synthetic material, e.g., polyurethane, of the main layer 1 during the expansion step.

According to an exemplary embodiment, a method for manufacturing the backing layer 2 of the invention comprises the steps of:
- providing a reinforcing layer 4 made of fibrous material;
- applying, to the reinforcing layer 4 made of fibrous material, a compound, in particular a fluid compound, comprising an aqueous dispersion of at least one polymer and inert fillers, each having thermal conductivity in the range between 0.01 W/mK and 3 W/mK, to obtain a coating layer 3 of the backing layer 2;
- drying said backing layer 2, preferably at a high temperature.

For example, a viscosity of the aforesaid fluid compound employed to obtain the coating layer 3 is of 2500 - 4500 cP (centipoise), with Brookfield spindle viscometer no. 6, 20 RPM, at a temperature of 23°C.

In particular, the high-temperature drying step can be carried out by positioning the backing layer 2 in, or passing it through, a furnace, e.g., a hot air furnace, at a temperature between 100°C and 250°C, for example.

The method can further comprise a step of winding the backing layer 2 to form a roll adapted to transport and/or be used in a winding system of the backing layer 2 during the manufacturing of the insulating panel 10, 20.

According to an embodiment, the manufacturing of the backing layer 2 is continuously carried out by means of a system and method of the roll-to-roll type, in which (upstream) the reinforcing layer 4 made of fibrous material is continuously unwound, with (further downstream) the simultaneous application of the coating layer 3 to the unwound reinforcing layer 4, and with (even further downstream) the simultaneous drying of the applied coating layer 3, and with (even further downstream) the rewinding of the backing layer 2 obtained once the coating layer 3 has been dried.

According to an embodiment, a method for manufacturing the insulating panel 10, 20 comprises the steps of:
- forming the main layer 1 made of expanded synthetic material, e.g., made of polyurethane or phenolic foam,
- applying the backing layer 2 to only one or both opposite first and second surfaces 1', 1", of the main layer 1, with the reinforcing layer 4 oriented towards the main layer 1.
In a different embodiment, the coating layer 3 of the backing layer 2 is oriented towards the main layer 1.

The formation of the main layer 1 can comprise a step of spraying and/or extruding and/or spreading a polymer foam, e.g., a polyurethane foam, only on a first backing layer 2 and then applying a second backing layer 2 to the main polymer layer 1 formed after the expansion of the polymer foam so that such a main layer 1 of panel 10, 20 is interposed between the two backing layers 2.

Alternatively, the formation of the main layer 1 can comprise a step of spraying and/or extruding and/or spreading the polymer foam, e.g., a polyurethane foam, in a gap between two of the aforesaid previously obtained backing layers 2 so that the backing layers 2 form a delimitation for the expansion of the polymer foam forming the main insulating layer 1.

In a further embodiment, the backing layer 2 of the invention can be glued onto an already-formed panel, in particular it can be glued onto other backing layers of the panel for the purpose of improving the thermal insulation performance of such a panel.

The backing layer 2 for insulating panels 10, 20 of the invention has advantages and achieves the preset objects.

In particular, the Applicant has run comparative tests on the thermal insulation properties of the coating layer 3 of the backing layer 2 of the invention according to Standard ASTM D-7984-16.

In such tests, four samples of a coating layer for backing layers for conventional-type panels containing inert fillers, mainly consisting of calcium carbonate, were compared with four samples of a coating layer 3 of the invention containing hollow glass spheres.

Note that the four samples STD-1, STD-2, STD-3, STD-4 of the conventional-type coating layer are comparable to paint layers of about 3mm spread on a paper backing layer.
Such samples have substantially the same concentration of calcium carbonate inert fillers and differ from each other only in manufacturing tolerances.

Similarly, the four samples K15-1, K15-2, K15-3, K15-4 of the coating layer 3 of the invention are comparable to paint layers of about 3mm spread on a paper backing layer.
Such samples have substantially the same concentration of hollow glass spheres and differ from each other only in manufacturing tolerances.

According to the invention, the aforesaid hollow glass spheres employed in samples K15-1, K15-2, K15-3, K15-4 each have thermal conductivity in the range between 0.044 W/mK and 0.143 W/mK.
For example, the hollow glass spheres used for the test are manufactured by 3M Advanced Materials Division of 3M Italia Srl, via N. Bobbio 21, I-20096 Pioltello (MI), and are described in the document "Scheda Tecnica - Glass Bubbles - Microsfere cave di vetro" (Data sheet - Glass Bubbles - Hollow glass microspheres) to 3M Italia Srl available at https://multimedia.3m.com/mws/media/2190248O/3m-glass-bubbles-overview-brochure-italian-data-sheet.pdf.
In particular, the hollow glass microspheres employed have a density in the range between 0.13-0.17 g/cm³, a thermal conductivity of 0.051 W/mK and a dimensional distribution at 50% (d50) of 60um.
According to standard ASTM D-7984-16, a measurement was taken of the thermal conductivity of the four paint samples STD-1, STD-2, STD-3, STD-4 of the conventional-type coating layer and of the four samples K15-1, K15-2, K15-3, K15-4 of the coating layer 3 according to the invention.

A C-Therm TCi thermal conductivity analyzer to C-Therm Technologies Ltd was used to take such a measurement.
Such a C-Therm TCi thermal conductivity analyzer uses the Modified Transient Plane Source (MTPS) technique to characterize the thermal conductivity and effusivity of materials.
Such an analyzer employs a unilateral interfacial heat reflectance sensor which applies a temporary constant heat source to the sample being tested. Generally, a current measuring pulse is between 1 and 3 seconds.
The effusivity and thermal conductivity are measured directly, providing a detailed overview of the heat transfer properties of the sample material.

The conductivity analyzer operates according to the following steps.
(1) A known current is applied to the coil heating element of the sensor, providing a small amount of heat.
(2) A protective ring surrounds the coil of the primary sensor to support a one-dimensional heat transfer in the sample. The applied current causes an increase in the temperature at the interface between the sensor and the sample to be tested, which causes a variation in the voltage drop of the sensor element.
(3) The speed of the sensor voltage increase is used to determine the thermal properties in the sample. In particular, the thermal conductivity is inversely proportional to the speed of temperature increase in the contact point between the sensor and the sample tested.
The voltage is used as an element representative of temperature values and increases more quickly when materials with low thermal conductivity are tested (e.g., foam).
In contrast, the slope of the voltage will be flatter for materials with higher thermal conductivity (e.g., metal).

The results of the tests carried out on the four paint samples STD-1, STD-2, STD-3, STD-4 of the conventional-type coating layer and of the four samples K15-1, K15-2, K15-3, K15-4 of the coating layer 3 according to the invention are shown in Table 1.

**TABLE 1**

| Samples | Thermal conductivity W/mK | Samples | Thermal conductivity W/mK |
|---|---|---|---|
| STD - 1 | **0.610** | K15 - 1 | **0.125** |
| STD - 2 | **0.530** | K15 - 2 | **0.102** |
| STD - 3 | **0.559** | K15 - 3 | **0.120** |
| STD - 4 | **0.661** | K15 - 4 | **0.145** |

It is noted from the aforesaid table that the thermal conductivity value for each of the four paint samples K15-1, K15-2, K15-3, K15-4 of the coating layer 3 of the invention which comprise the hollow glass spheres, is 5 or 6 times less than the thermal conductivity values of each of the four paint samples STD-1, STD-2, STD-3, STD-4 of the conventional-type coating layer which comprises calcium carbonate inert fillers.
Note that each of the paint samples K15-1, K15-2, K15-3, K15-4 of the coating layer 3 of the invention which comprise the hollow glass spheres have a much lower concentration of inert fillers than the paint samples STD-1, STD-2, STD-3, STD-4 of the conventional-type coating layer.

In other words, the backing layer 2 itself has thermal insulation properties and, when applied to a panel 10, 20, it contributes to improving the thermalinsulating properties by compensating for, or at least mitigating, the reduction in efficiency in terms of thermal insulation of the panel caused by the presence of the irregularities present in a portion of the insulating foam layer.

Moreover, the Applicant has run comparative tests on the thermal conductivity properties of the coating layer 3 of the backing layer 2 for insulating panels of the invention with the guarded hot plate test according to Standard UNI EN 12664:2002.

In such tests, two coating samples of a backing layer for panels according to the invention, consisting of a binder in a water-based styrene acrylic dispersion and a compound containing hollow glass spheres, were compared with two coating samples of a known-type backing layer, consisting of a binder in a water-based styrene acrylic dispersion and a compound containing calcium carbonate-based inert fillers.
In particular, the hollow glass spheres employed in the samples each have a thermal conductivity of 0.051 W/mK and are manufactured by 3M Advanced Materials Division of 3M Italia Srl, via N. Bobbio 21, 20096 Pioltello (MI) .

The coating samples with hollow glass spheres were poured into molds and dried so as to obtain specimens having nominal size of about 50cm x 50cm, by grinding. The specimens were conditioned in an environment at a temperature of 23°C and 50% relative humidity.

The coating samples with calcium carbonate were poured into molds and dried so as to obtain specimens having nominal size of about 50cm x 50cm, by grinding. The tests pieces were conditioned in an environment at a temperature of 23°C and at 50% relative humidity.

The equipment used to examine the test tubes was a hot plate with a guard ring, having symmetrical dual test tube configuration, with square front sections having dimensions 517mm x 517mm, vertical position, and provided with differential thermometric sensors in contact with the surfaces of the test tubes (no. 5 sensors on each surface). Expanded EPDM rubber sheets were interposed between the surfaces of the specimens and the equipment to improve the thermal contact thereof. The test was run at the average test temperature of 10°C.
The tests run, according to Standard UNI EN 12664:2002, on the specimens and related to the hollow sphere coating, according to the invention, returned a thermal conductivity value of the backing layer of 0.139 ± 0.002 W/mK.
The tests run, according to Standard UNI EN 12664:2002, on the specimens related to the calcium carbonate coating returned a thermal conductivity value of the backing layer of 0.765 ± 0.03 W/mK.

In light of this, the backing layer 2 for insulating panels of the invention which employs a coating layer 3 comprising hollow glass spheres has a lower thermal conductivity than that of a conventional backing layer which comprises, for example, calcium carbonate as a filler. Such an effect is ensured using hollow spheres which, by virtue of the presence of the cavity, increase the thermal insulation properties. Calcium carbonate does not allow such an effect to be achieved.

Moreover, the coating layer 3 of the backing layer 2 containing the hollow spheres also has other advantages.
In particular, such a coating 3 is more flexible than standard-type coatings. This allows limiting the appearance of cracks on the finished backing layer 2 due to mechanical stresses on such a backing layer prior to the application to the panel.

Moreover, the use of hollow spheres in the coating layer 3 increases the surface area of each sphere, which is advantageous in the specific anti-condensation function of the backing layer 2 for panels.

Indeed, as known, when the temperature of the surfaces reaches the dew point in particularly humid environments, the water vapor contained in the atmosphere condenses to form small drops which flow by gravity and/or in the presence of heat bridges, thus resulting in water accumulations which do not evaporate.

The low thermal conductivity of the hollow spheres of the coating layer 3, which limits the temperature gradient between the environment and the surface of the panel, and the increase in the surface area, which increases the ability to temporarily retain the condensed water without allowing it to drip, provide the backing layer 2 of the invention with an anti-condensation ability and accordingly the insulating panel 10, 20 comprising such a backing layer with antimold properties.

In order to meet contingent needs, those skilled in the art may make changes and adaptations to the embodiments of a backing layer and the insulating construction panel described above, or can replace elements with others which are functionally equivalent, without departing from the scope of the following claims. All the features described above as belonging to one possible embodiment can be implemented irrespective of the other embodiments described.

## Claims

1. A backing layer (2) for an insulating construction panel (10; 20) of the type comprising:
- a main layer (1) made of thermally insulating material comprising a first surface (1') and an opposite second surface (1");
- at least one backing layer (2) connected to the main layer (1) along at least one of said first and second surfaces (1', 1"),
wherein said backing layer (2) comprises:
- a reinforcing layer (4) made of fibrous material,
- a coating layer (3) of the reinforcing layer,
**characterized in that**
the coating layer (3) is obtained by applying, to the reinforcing layer (4) made of fibrous material, a compound comprising an aqueous dispersion of at least one polymer and inert fillers, each having thermal conductivity in the range between 0.01 W/mK and 3 W/mK, and then drying.

2. A backing layer (2) according to claim 1, wherein said inert fillers of the coating layer (3) have an average diameter in the range 10µm - 200um, preferably an average diameter in the range 20um - 60um.

3. A backing layer (2) according to claim 1 or 2, wherein said inert fillers of the coating layer (3) are selected from the group consisting of: hollow glass microspheres, hollow ceramic microspheres.

4. A backing layer (2) according to claim 1, wherein said inert fillers of the coating layer (3) comprise hollow glass microspheres, the thermal conductivity value of each of said hollow glass microspheres is between 0.044 W/mK and 0.143 W/mK.

5. A backing layer (2) according to claim 4, wherein said inert fillers of the coating layer (3) comprise hollow glass microspheres, the thermal conductivity value of each of said hollow glass microspheres is between 0.051 W/mK and 0.085 W/mK.

6. A backing layer (2) according to claim 1, wherein said inert fillers of the coating layer (3) comprise hollow glass microspheres, each having a thermal conductivity of 0.051 W/mK or a thermal conductivity of 0.065 W/mK or a thermal conductivity of 0.085 W/mK.

7. A backing layer (2) according to any one of claims 1-3, wherein said inert fillers of the coating layer (3) comprise hollow glass microspheres having an average diameter of 60um, wherein the thermal conductivity value of each microsphere is equal to 0.051 W/mK.

8. A backing layer (2) according to claim 1, wherein said applied compound of the coating layer (3) comprises from 5% to 15%, percentages by weight, of inert fillers of various types, selected from the group consisting of: hollow glass microspheres, hollow ceramic microspheres.

9. A backing layer (2) according to claim 8, wherein the inert fillers of the applied compound used to obtain the coating layer (3) comprise 90%, by weight, of hollow glass microspheres with conductivity of 0.051 W/mK, and 10%, by weight, of hollow ceramic microspheres with conductivity of 2.3 W/mK.

10. A backing layer (2) according to claim 1, wherein said applied compound of the coating layer (3) comprises from 5% to 15%, percentages by weight, of inert fillers of the same type and having mutually different thermal conductivity values.

11. A backing layer (2) according to claim 10, wherein the inert fillers of the applied compound used to obtain the coating layer (3) comprise 70%, by weight, of hollow glass microspheres with conductivity of 0.051 W/mK, and 30%, by weight, of hollow glass microspheres with conductivity of 0.065 W/mK.

12. A backing layer (2) according to claim 1, wherein the applied compound of said coating layer (3) comprises:
- a polymer resin in aqueous dispersion,
- said inert fillers comprising hollow glass microspheres, wherein the thermal conductivity value of each of said hollow glass microspheres is between 0.044 W/mK and 0.143 W/mK, more specifically between 0.051 W/mK and 0.085 W/mK,
optionally water and additives.

13. A backing layer (2) according to claim 1, wherein the applied compound of said coating layer (3) comprises:
- from 10% to 30%, percentages by weight, of styrene acrylic resin in aqueous dispersion;
- from 5% to 15%, percentages by weight, of hollow glass microspheres wherein the thermal conductivity value of each microsphere is equal to 0.051 W/mK or 0.065 W/mK or 0.085 W/mK,
- from 20% to 30%, percentages by weight, of further inert fillers and additives,
- from 30% to 50%, percentages by weight, of water.

14. A backing layer (2) according to claim 1, wherein said reinforcing layer (4) made of fibrous material is a non-woven fiberglass fabric.

15. An insulating construction panel (10), comprising:
- a main layer (1) made of thermally insulating material comprising a first surface (1') and an opposite second surface (1"),
- a backing layer (2) according to any one of claims 1-14 connected to the main layer (1) along at least one of said first and second surfaces (1', 1") with the reinforcing layer (4) made of fibrous material facing the main layer (1).

16. An insulating construction panel (20), comprising:
- a main layer (1) made of thermally insulating material comprising a first surface (1') and an opposite second surface (1"),
- a backing layer (2) according to any one of claims 1-14 connected to the main layer (1) along at least one of said first and second surfaces (1', 1") with the coating layer (3) of the reinforcing layer facing the main layer (1) .

17. A method for manufacturing a backing layer (2) for an insulating construction panel (10; 20) of the type comprising:
- a main layer (1) made of thermally insulating material comprising a first surface (1') and an opposite second surface (1"),
- at least one backing layer (2) connected to the main layer (1) along at least one of said first and second surfaces (1', 1"),
wherein said method comprises the steps of:
- providing a reinforcing layer (4) made of fibrous material;
- applying, to the reinforcing layer (4) made of fibrous material, a compound comprising an aqueous dispersion of at least one polymer and inert fillers, each having thermal conductivity in the range between 0.01 W/mK and 3 W/mK, to obtain a coating layer (3) of said reinforcing layer;
- drying said backing layer (2).

18. A manufacturing method according to claim 17, wherein said inert fillers of the coating layer (3) comprise hollow glass microspheres, the thermal conductivity value of each of said hollow glass microspheres is between 0.044 W/mK and 0.143 W/mK, more specifically between 0.051 W/mK and 0.085 W/mK.

19. A manufacturing method according to claim 17, wherein said inert fillers of the coating layer (3) comprise hollow glass microspheres, each having a thermal conductivity of 0.051 W/mK or a thermal conductivity of 0.065 W/mK or a thermal conductivity of 0.085 W/mK.
